# EUROPEAN PATENT APPLICATION

(11) **EP 4 796 852 A1**
(43) Date of publication of application: **26.08.2026**
(21) Application number: 24878947.1
(22) Date of filing: 14.10.2024
(51) Int. Cl.: F24F 3/14, F24F 3/147, F24F 13/22, B01D 53/26, F24F 6/00

(54) **LIQUID WATER SOURCE COLLECTION DEVICE, AIR CONDITIONER, CONTROL METHOD AND RELATED DEVICE**

(30) Priority: 16.10.2023 CN 202311349720
(71) Applicant: Shenzhen Roborock Innovation Technology Co., Ltd., Shenzhen, Guangdong 518000 (CN)
(72) Inventor: LI, Xing, Shenzhen, Guangdong 518000 (CN); WANG, Zhe, Shenzhen, Guangdong 518000 (CN); MI, Chang, Shenzhen, Guangdong 518000 (CN); XING, Siwei, Shenzhen, Guangdong 518000 (CN)
(74) Representative: Maiwald GmbH
(86) International application number: PCT/CN2024/124653
(87) International publication number: WO 2025/082303

(57) **Abstract**

Provided are a liquid water source collection device, an air conditioner, a control method and a related device, relating to the technical field of temperature adjusting apparatuses. The liquid water source collection device comprises a liquid collection assembly (110), a liquid enrichment assembly (120), a first pipe assembly (130) and a second pipe assembly (140). During use, the first pipe assembly (130) is used for supplying air to a moisture absorption and moisture discharging member, and the moisture absorption and moisture discharging member captures water vapor in the air; an energy supply assembly can provide energy to the moisture absorption and moisture discharging member to cause the moisture absorption and moisture discharging member to release water vapor; and, through the second pipe assembly (140), the water vapor can be supplied to the liquid collection assembly (110) for storage.

## Description

The present disclosure claims priority to Chinese Patent Application No. 202311349720.4, filed with the China National Intellectual Property Administration on October 16, 2023, and entitled "LIQUID WATER SOURCE COLLECTION APPARATUS, AIR CONDITIONER, CONTROL METHOD, AND RELATED APPARATUS", the content of which is incorporated herein by reference in its entirety.

### TECHNICAL FIELD

Embodiments of the present disclosure relate to the technical field of temperature regulation equipment, and in particular, relate to a liquid water source collection apparatus, an air conditioner, a control method, and a related apparatus.

### BACKGROUND ART

In the use of some air conditioning devices in conventional technology, liquid water is required; for example, an air conditioner needs to use water to regulate the humidity of the air or perform cleaning. The inventor realized that most water supply methods in conventional technology involve providing a water tank inside the air conditioner and replenishing water for the air conditioner by a user filling water into the water tank, which increases the operation workload of the user; moreover, the user is prone to forgetting to replenish water, rendering some functions of the air conditioner unusable.

### SUMMARY OF THE INVENTION

The present disclosure aims to solve at least one of the technical problems existing in the prior art or the related art.

Therefore, a first aspect of the present disclosure provides a liquid water source collection apparatus.

A second aspect of the present disclosure provides an air conditioner.

A third aspect of the present disclosure provides a control method.

A fourth aspect of the present disclosure provides a computer-readable storage medium.

A fifth aspect of the present disclosure provides a control apparatus.

In view of this, according to the first aspect of the embodiments of the present disclosure, a liquid water source collection apparatus is provided. The liquid water source collection apparatus includes:
a liquid collection assembly;
a liquid enrichment assembly including a moisture adsorption-desorption member and an energy supply member, the energy supply member being at least partially disposed corresponding to the moisture adsorption-desorption member;
a first pipeline assembly in communication with the moisture adsorption-desorption member and configured to supply a water-containing medium to the moisture adsorption-desorption member; and
a second pipeline assembly, an input end of the second pipeline assembly being in communication with the moisture adsorption-desorption member, an output end of the second pipeline assembly being in communication with the liquid collection assembly, and the liquid collection assembly being configured to receive moisture released by the moisture adsorption-desorption member.

In one feasible embodiment, the moisture adsorption-desorption member includes an enrichment zone and a regeneration zone.

The moisture adsorption-desorption member includes an enrichment zone and a regeneration zone.

The first pipeline assembly includes:
an input pipeline in communication with the liquid enrichment assembly and disposed upstream of an airflow of the enrichment zone; and
an output pipeline in communication with the liquid enrichment assembly and disposed downstream of the airflow of the enrichment zone.

The second pipeline assembly includes:
a moisture intake pipeline in communication with the liquid enrichment assembly and disposed upstream of an airflow of the regeneration zone; and
a moisture release pipeline, one end of the moisture release pipeline being in communication with the liquid enrichment assembly and disposed downstream of the airflow of the regeneration zone, and the other end of the moisture release pipeline being in communication with the liquid collection assembly.

In one feasible embodiment, the moisture adsorption-desorption member includes:
a first housing, with the enrichment zone and the regeneration zone formed on the first housing; and
a rotary disk rotatably disposed within the first housing, the rotary disk being configured to capture water molecules in air.

The energy supply member includes:
a regeneration member configured to provide energy to the regeneration zone to cause the water molecules to detach from the rotary disk.

In one feasible embodiment, the moisture adsorption-desorption member also includes an enrichment member configured to provide energy to the enrichment zone.

The enrichment member includes at least one of a phase change heat exchanger, a Peltier effect heat exchanger, a liquid cooling heat exchanger, a fan, or a vortex tube; and/or
the regeneration member includes at least one of: a thermal radiation, a hot end of a heat pump, a hot end of a heat pipe, or a solar heat source.

In one feasible embodiment, the liquid enrichment assembly also includes:
a first air supply member disposed within the input pipeline and/or the output pipeline and configured to cause air to flow through the enrichment zone of the liquid enrichment assembly;
a second air supply member disposed within the moisture intake pipeline and/or the moisture release pipeline and configured to cause air to flow through the regeneration zone of the liquid enrichment assembly; and
a driving member connected to the rotary disk and configured to drive the rotary disk to rotate.

In one feasible embodiment, the liquid collection assembly is configured to be connected to a water-using apparatus, and the water-using apparatus includes a humidification component or a cleaning component.

According to the second aspect of the embodiments of the present disclosure, an air conditioner is provided. The air conditioner includes:
the liquid water source collection apparatus according to any one of the above technical solutions; and
an air conditioner body.

In one feasible embodiment, the air conditioner body includes a heat exchanger, and the heat exchanger is in communication with the second pipeline assembly and the liquid collection assembly.

In one feasible embodiment, the air conditioner body includes:
an indoor heat exchanger;
a compressor connected to the indoor heat exchanger;
an outdoor heat exchanger connected to the compressor;
a first throttling assembly connected to the outdoor heat exchanger and the indoor heat exchanger; and
a first refrigerant pipeline in communication with the indoor heat exchanger, the compressor, the outdoor heat exchanger, and the first throttling assembly to form a refrigerant circulation.

In one feasible embodiment, the moisture release pipeline and the liquid collection assembly are in communication with at least one of the indoor heat exchanger or the outdoor heat exchanger.

In the case where the moisture release pipeline is in communication with the outdoor heat exchanger and the indoor heat exchanger, the liquid collection assembly includes a first water tank and a second water tank; the first water tank is in communication with the outdoor heat exchanger, and the second water tank is in communication with the indoor heat exchanger.

In one feasible embodiment, the air conditioner body also includes: a second outdoor heat exchanger in communication with the regeneration zone and configured to condense moisture released from the regeneration zone.

In one feasible embodiment, the second outdoor heat exchanger is a first liquid collection heat exchanger, and the moisture release pipeline is in communication with the first liquid collection heat exchanger; the air conditioner body also includes:
a second refrigerant pipeline in communication with the first liquid collection heat exchanger, one end of the second refrigerant pipeline being in communication with the indoor heat exchanger, and the other end of the second refrigerant pipeline being in communication with the compressor, such that the first liquid collection heat exchanger is connected in parallel with the outdoor heat exchanger; and
a second throttling assembly connected to the indoor heat exchanger and the first liquid collection heat exchanger; and/or a third air supply member configured to supply air to the first liquid collection heat exchanger.

In one feasible embodiment, the second outdoor heat exchanger is a second liquid collection heat exchanger, and the moisture release pipeline is in communication with the second liquid collection heat exchanger; the air conditioner body also includes:
a third refrigerant pipeline in communication with the second liquid collection heat exchanger, one end of the third refrigerant pipeline being in communication with the first throttling assembly, and the other end of the third refrigerant pipeline being in communication with the indoor heat exchanger; and
a control valve disposed on the third refrigerant pipeline; and/or a fourth air supply member configured to supply air to the second liquid collection heat exchanger.

In one feasible embodiment, the air conditioner also includes:
a second housing, with the outdoor heat exchanger, the compressor, and the liquid collection assembly disposed within the second housing.

In one feasible embodiment, the air conditioner also includes:
a humidifier, the liquid collection assembly being in communication with the humidifier,
where the humidifier includes a curtain body, and the liquid collection assembly is configured to output liquid to the curtain body.

In one feasible embodiment, the air conditioner also includes:
a fresh air module including a first filter member;
a second filter member configured to be disposed upstream of the airflow of the enrichment zone and/or the regeneration zone; and
a cleaning mechanism, the liquid collection assembly being in communication with the cleaning mechanism, and the cleaning mechanism being configured to clean the first filter member and/or the second filter member.

According to the third aspect of the embodiments of the present disclosure, a control method is provided. The control method is used to control the air conditioner according to any one of the above technical solutions, and the control method includes:
controlling, in response to a first water collection instruction, the first pipeline assembly to turn on to cause the liquid enrichment assembly to enrich water molecules; and
controlling the second pipeline assembly to open to collect liquid water into the liquid collection assembly.

In one feasible embodiment, the control method includes: controlling, in response to a second water collection instruction, the heat exchanger in communication with the liquid collection assembly to serve as an evaporator to form condensed water and/or frost; and
collecting, by the liquid collection assembly, the condensed water and/or water resulting from melting of the frost.

In one feasible embodiment, the control method includes: controlling, in response to a third water collection instruction, the moisture release pipeline to turn on to be in communication with the heat exchanger in communication with the liquid collection assembly; controlling the heat exchanger in communication with the liquid collection assembly to serve as an evaporator to form condensed water and/or frost; and
collecting, by the liquid collection assembly, the condensed water and/or water resulting from melting of the frost.

In one feasible embodiment, the control method also includes:
generating, based on a water usage demand, the first water collection instruction, the second water collection instruction, or the third water collection instruction; and/or
generating, based on a water content of external air, the first water collection instruction, the second water collection instruction, or the third water collection instruction.

In one feasible embodiment, the step of generating, based on the water usage demand, the first water collection instruction, the second water collection instruction, or the third water collection instruction includes:
generating the second water collection instruction in the case where the water usage demand is less than a first threshold;
generating the first water collection instruction in the case where the water usage demand is greater than or equal to the first threshold and less than a second threshold; and
generating the third water collection instruction in the case where the water usage demand is greater than or equal to the second threshold;
where a value of the first threshold is less than a value of the second threshold; and/or
the step of generating, based on the water content of the external air, the first water collection instruction, the second water collection instruction, or the third water collection instruction includes:
   generating the third water collection instruction in the case where the water content is less than a fourth threshold;
   generating the first water collection instruction in the case where the water content is greater than or equal to the fourth threshold and less than a fifth threshold; and
   generating the second water collection instruction in the case where the water content is greater than or equal to the fifth threshold;
   where a value of the fourth threshold is less than a value of the fifth threshold.

According to the third aspect of the embodiments of the present disclosure, a computer-readable storage medium is provided.

The computer-readable storage medium stores a computer program to implement the control method according to any one of the above technical solutions.

According to the fourth aspect of the embodiments of the present disclosure, a control apparatus is provided. The control apparatus includes:
a memory storing a computer program; and
a processor running the computer program;
where the processor, when running the computer program, implements the control method according to any one of the above technical solutions.

Compared with the prior art, the present disclosure includes at least the following beneficial effects.

The liquid water source collection apparatus provided according to the embodiments of the present disclosure includes a liquid collection assembly, a liquid enrichment assembly, a first pipeline assembly, and a second pipeline assembly. During use, the first pipeline assembly is configured to supply air to the moisture adsorption-desorption member, and the moisture adsorption-desorption member captures water vapor and moisture in the air; subsequently, an energy supply assembly can provide energy to the moisture adsorption-desorption member to cause the moisture adsorption-desorption member to release moisture, and the moisture can be supplied to the liquid collection assembly through the second pipeline assembly for storage. When other electrical appliances need to use liquid water, for example, when an air conditioner or a humidifier needs to use liquid water, the liquid water in the liquid collection assembly can be supplied to the electrical appliances. Based on this, by means of the liquid water source collection apparatus provided according to the embodiments of the present disclosure, moisture and water vapor in the air can be utilized to automatically replenish liquid water into the liquid collection assembly; therefore, there is no need for a user to replenish water, or the frequency of water replenishment by the user can be reduced to a great extent, thereby ensuring the convenience of water usage for the electrical appliance and improving user experience. In addition, by means of the liquid water source collection apparatus provided according to the embodiments of the present disclosure, when water is not needed, liquid water can be enriched by the liquid enrichment assembly and stored by the liquid collection assembly; therefore, when water is needed, the liquid collection assembly can supply liquid water in time, ensuring that the water-using electrical appliance can obtain sufficient liquid water.

### BRIEF DESCRIPTION OF THE DRAWINGS

By reading the detailed description of preferred embodiments below, various additional advantages and benefits will become clear to those of ordinary skill in the art. The drawings are provided solely for the purpose of illustrating the preferred embodiments and are not to be construed as limiting the scope of the present disclosure. In addition, the same components are denoted by the same reference numerals throughout the drawings. In the drawings:
FIG. 1 is a schematic structural diagram of a liquid water source collection apparatus according to one embodiment of the present disclosure;
FIG. 2 is a schematic structural diagram of an air conditioner according to a first embodiment of the present disclosure;
FIG. 3 is a schematic structural diagram of an air conditioner according to a second embodiment of the present disclosure;
FIG. 4 is a schematic structural diagram of an air conditioner according to a third embodiment of the present disclosure;
FIG. 5 is a schematic structural diagram of an air conditioner according to a fourth embodiment of the present disclosure;
FIG. 6 is a schematic structural diagram of an air conditioner according to a fifth embodiment of the present disclosure;
FIG. 7 is a schematic structural diagram of an air conditioner according to a sixth embodiment of the present disclosure;
FIG. 8 is a schematic step flowchart of a control method for an air conditioner according to one embodiment of the present disclosure;
FIG. 9 is a structural block diagram of a computer-readable storage medium according to one embodiment of the present disclosure; and
FIG. 10 is a structural block diagram of a control apparatus according to one embodiment of the present disclosure.

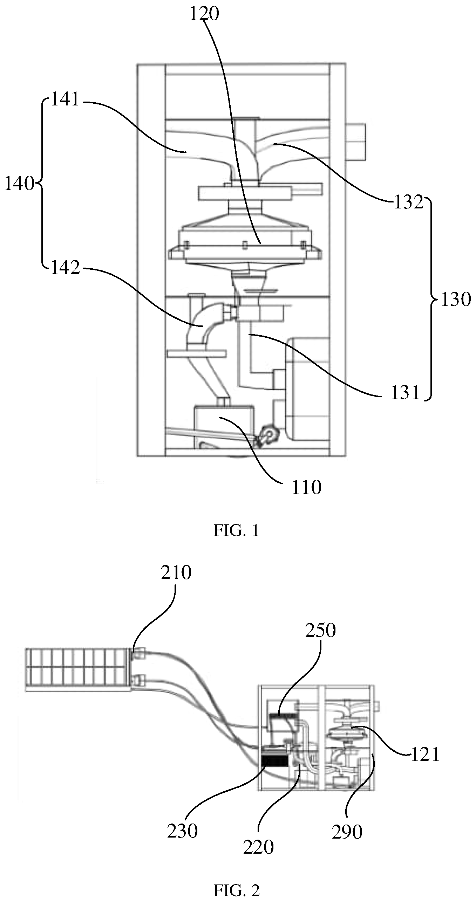

The correspondence relationships between reference numerals and component names in FIGs. 1 to 7 are as follows:
110 liquid collection assembly, 120 liquid enrichment assembly, 130 first pipeline assembly, 140 second pipeline assembly;
111 first water tank, 112 second water tank, 121 first housing, 122 rotary disk, 123 first air supply member, 124 second air supply member, 125 driving member, 131 input pipeline, 132 output pipeline, 141 moisture intake pipeline, 142 moisture release pipeline;
210 indoor heat exchanger, 220 compressor, 230 outdoor heat exchanger, 240 first throttling assembly, 250 first liquid collection heat exchanger, 260 second throttling assembly, 270 second liquid collection heat exchanger, 280 control valve, 290 second housing, 300 humidifier, 310 fresh air module, 320 second filter member, 330 cleaning mechanism.

### DETAILED DESCRIPTION

In order to better understand the above technical solutions, the technical solutions in embodiments of the present disclosure will be described in detail below with reference to the drawings and specific embodiments. It should be understood that the embodiments of the present disclosure and specific features in the embodiments are detailed descriptions of the technical solutions in the embodiments of the present disclosure, but are not intended to limit the technical solutions in the present disclosure. The embodiments of the present disclosure and the technical features in the embodiments may be combined with each other without conflict.

As shown in FIG. 1, according to a first aspect of the embodiments of the present disclosure, a liquid water source collection apparatus is provided. The liquid water source collection apparatus includes: a liquid collection assembly 110; a liquid enrichment assembly 120 including a moisture adsorption-desorption member and an energy supply member, the energy supply member being at least partially disposed corresponding to the moisture adsorption-desorption member; a first pipeline assembly 130 in communication with the moisture adsorption-desorption member and configured to supply a water-containing medium to the moisture adsorption-desorption member; and a second pipeline assembly 140, an input end of the second pipeline assembly 140 being in communication with the moisture adsorption-desorption member, and an output end of the second pipeline assembly being in communication with the liquid collection assembly 110. The liquid collection assembly 110 is configured to receive moisture released by the moisture adsorption-desorption member.

The liquid water source collection apparatus provided according to the embodiments of the present disclosure includes a liquid collection assembly 110, a liquid enrichment assembly 120, a first pipeline assembly 130, and a second pipeline assembly 140. During use, the first pipeline assembly 130 is configured to supply air to the moisture adsorption-desorption member, and the moisture adsorption-desorption member captures water vapor and moisture in the air; subsequently, an energy supply assembly can provide energy to the moisture adsorption-desorption member to cause the moisture adsorption-desorption member to release moisture, and the moisture can be supplied to the liquid collection assembly 110 through the second pipeline assembly 140 for storage. When other electrical appliances need to use liquid water, for example, when an air conditioner or a humidifier 300 needs to use liquid water, the liquid water in the liquid collection assembly 110 can be supplied to the electrical appliances. Based on this, by means of the liquid water source collection apparatus provided according to the embodiments of the present disclosure, moisture and water vapor in the air can be utilized to automatically replenish liquid water into the liquid collection assembly 110; therefore, there is no need for a user to replenish water, or the frequency of water replenishment by the user can be reduced to a great extent, thereby ensuring the convenience of water usage for the electrical appliance and improving user experience. In addition, by means of the liquid water source collection apparatus provided according to the embodiments of the present disclosure, when water is not needed, liquid water can be enriched by the liquid enrichment assembly 120 and stored by the liquid collection assembly 110; therefore, when water is needed, the liquid collection assembly 110 can supply liquid water in time, ensuring that the water-using electrical appliance can obtain sufficient liquid water.

It can be understood that, in the liquid water source collection apparatus provided according to the embodiments of the present disclosure, during use, the medium output via the first pipeline assembly 130 may also be other water-containing media, and air is merely an example; the type and kind of the medium output via the first pipeline assembly 130 are not specifically limited in the present disclosure.

As shown in FIG. 1, in one feasible embodiment, the moisture adsorption-desorption member includes an enrichment zone and a regeneration zone; the first pipeline assembly 130 includes: an input pipeline 131 disposed upstream of the airflow of the liquid enrichment assembly 120; and an output pipeline 132 in communication with the liquid enrichment assembly 120 and disposed downstream of the airflow of the enrichment zone. The second pipeline assembly 140 includes: a moisture intake pipeline 141 disposed upstream of the airflow of the liquid enrichment assembly 120; and a moisture release pipeline 142, one end of the moisture release pipeline 142 being in communication with the liquid enrichment assembly 120 and directed toward the downstream of the airflow of the regeneration zone, and the other end of the moisture release pipeline being in communication with the liquid collection assembly 110.

In this technical solution, the structural composition of the moisture adsorption-desorption member is further provided. The moisture adsorption-desorption member may include an enrichment zone and a regeneration zone. During use, the first pipeline assembly 130 supplies air or other media carrying water vapor to the enrichment zone, and the enrichment zone can capture and enrich the water vapor or moisture; the energy supply member can provide energy to the regeneration zone to cause the captured moisture or water vapor to detach from the moisture adsorption-desorption member and enter the second pipeline assembly 140, and further be transported to the liquid collection assembly 110 through the second pipeline assembly 140.

In this technical solution, the structural compositions of the first pipeline assembly 130 and the second pipeline assembly 140 are further provided. The first pipeline assembly 130 may include an input pipeline 131 and an output pipeline 132, and the second pipeline assembly 140 may include a moisture intake pipeline 141 and a moisture release pipeline 142. During use, the input pipeline 131 is configured to introduce external air, and the air is supplied to the enrichment zone through the input pipeline 131; then, the moisture and/or water vapor in the air is captured by the enrichment zone, and subsequently, the air is discharged out of the liquid water source collection apparatus through the output pipeline 132. When it is necessary to utilize the liquid collection assembly 110 to collect liquid, the energy supply member provides energy to the moisture adsorption-desorption member, causing the moisture or water vapor to detach from the moisture adsorption-desorption member; in this case, air is introduced via the moisture intake pipeline 141, flows through the regeneration zone, and is then supplied into the moisture release pipeline 142, and the airflow generated by the flowing air can carry the moisture or water vapor detached from the moisture adsorption-desorption member into the liquid collection assembly 110, completing the collection of water. By means of the arrangement of the input pipeline 131, the output pipeline 132, the moisture intake pipeline 141, and the moisture release pipeline 142, the enrichment of moisture onto the moisture adsorption-desorption member is facilitated, and meanwhile, the collection of liquid from the moisture adsorption-desorption member is facilitated, making the collection of liquid water by the liquid water source collection apparatus more convenient.

It can be understood that upstream and downstream are determined based on the flow direction of the medium. Taking the example where the medium output by the first pipeline assembly 130 is air, the air medium first passes through the upstream of the airflow of the enrichment zone, passes through the enrichment zone, and is then output via the downstream of the airflow. Similarly, for the upstream of the airflow and the downstream of the airflow of the regeneration zone, the air medium passes through the upstream of the airflow, passes through the regeneration zone, and is then output through the downstream of the airflow. That is, the upstream of the airflow and the downstream of the airflow are determined based on the flow direction of the medium, rather than being determined based on the placement position or orientation of the moisture adsorption-desorption member.

In one feasible embodiment, the liquid collection assembly 110 is configured to be connected to a water-using apparatus, and the water-using apparatus includes a humidification component or a cleaning component.

In this technical solution, the liquid collection assembly 110 can be connected to a water-using apparatus, and the liquid collection assembly 110 is configured to output liquid water to the water-using apparatus; the water-using apparatus can utilize the liquid water, thereby reducing the frequency of replenishing water to the water-using apparatus, or even making it unnecessary for the user to replenish water to the water-using apparatus, and thus improving user experience.

In this technical solution, the water-using apparatus may include a humidification component, and the liquid water collected by the liquid collection assembly 110 can be supplied to the humidification component; the humidification component utilizes this portion of water to improve the humidity environment of the air, which can make the user more comfortable.

In this technical solution, the water-using apparatus may also include a cleaning component, and the cleaning component can utilize this portion of water for cleaning; for example, an air conditioner may include a cleaning component, and the cleaning component is configured to clean a filter screen.

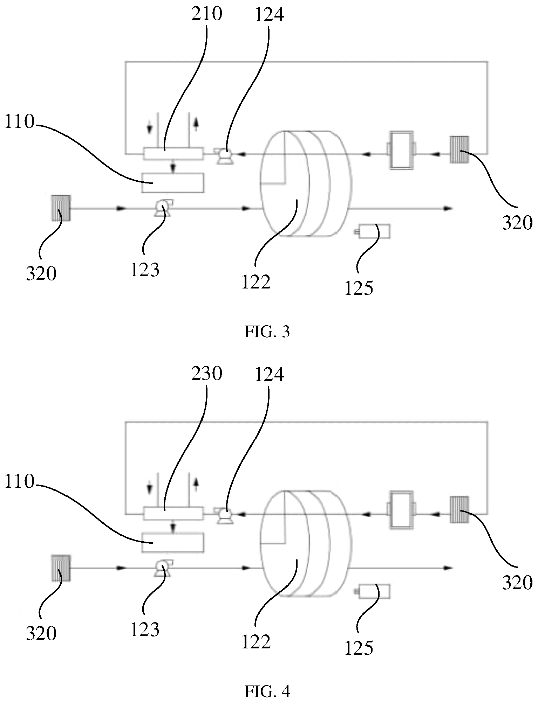

As shown in FIGs. 1 and 3, in one feasible embodiment, the moisture adsorption-desorption member includes: a first housing 121, with the enrichment zone and the regeneration zone formed on the first housing 121; and a rotary disk 122 rotatably disposed within the first housing 121, the rotary disk 122 being configured to capture water molecules in the air. The energy supply member includes: a regeneration member configured to provide thermal energy to the regeneration zone to cause the water molecules to detach from the rotary disk 122.

In this technical solution, the structural composition of the moisture adsorption-desorption member is further provided. The moisture adsorption-desorption member may include the first housing 121, the rotary disk 122, and an enrichment member. The input pipeline 131, the output pipeline 132, the moisture intake pipeline 141, and the moisture release pipeline 142 can all be connected onto the first housing 121, which facilitates the assembly of the liquid water source collection apparatus, facilitates the supply of gas to the moisture adsorption-desorption member, and facilitates the output of gas with high moisture content from the moisture adsorption-desorption member.

In the embodiments of the present disclosure, the rotary disk 122 is provided with a moisture adsorption agent for adsorbing moisture. The moisture adsorption agent may be, for example, zeolite, modified/synthetic zeolite, a molecular sieve (including but not limited to a zeolite molecular sieve, an A/X/Y-type molecular sieve, a ZSM molecular sieve, a Beta molecular sieve, etc.), a polymeric moisture adsorption agent, alkali metal aluminosilicate (a 13X molecular sieve), lithium chloride, silica gel, modified silica gel, activated aluminum oxide, and other materials with moisture adsorbing performance. The polymeric moisture adsorption agent is also referred to as a polymer adsorbent, which has a lower regeneration temperature than conventional adsorbents such as silica gel, activated carbon, or a molecular sieve.

In one embodiment, the rotary disk 122 may be made of porous materials such as zeolite, molecular sieves, metal organic frameworks (metal organic frameworks, MOFs), covalent organic frameworks (covalent organic frameworks, COFs), nano-carbon, and silicon dioxide. In one embodiment, the rotary disk 122 may also be formed by filling with granular solids or particles made of at least one of the above porous materials.

In one embodiment, the rotary disk 122 may be a honeycomb-shaped or corrugated rotary disk carrying a moisture adsorption agent, capable of adsorbing and desorbing the adsorbed moisture for repeated desorption and regeneration.

In one embodiment, the rotary disk 122 includes an inorganic/organic fiber substrate (e.g., ceramic, glass fiber, MOFs, COFs, or cordierite). The fiber substrate is coated with a moisture adsorption agent such as a molecular sieve. The molecular sieve is uniformly distributed between the fiber substrates and on the surface of the fiber substrates, so as to adsorb moisture from the airflow. The molecular sieve may include a single crystal molecular sieve such as an A-type molecular sieve, an X/Y-type molecular sieve, a ZSM molecular sieve, or a Beta molecular sieve, or a mixed crystal molecular sieve.

In this technical solution, the moisture adsorption-desorption member may include a rotary disk 122 and an enrichment member. During use, the rotary disk 122 can rotate relative to the first housing 121. When air comes into contact with the rotary disk 122 via the enrichment zone on the first housing 121 through the input pipeline 131, the enrichment member functions as a region of the rotary disk 122 corresponding to the enrichment zone, and moisture or water vapor in the air can be captured by the region of the rotary disk 122 corresponding to the enrichment zone. As the rotary disk 122 rotates, the rotary disk 122 will face toward the regeneration zone; by providing thermal energy to the regeneration zone via the energy supply member, the rotary disk 122 can release water molecules, and the water molecules can enter the liquid collection assembly 110 through the moisture release pipeline 142. Based on this, with the continuous rotation of the rotary disk 122, the capture and release of moisture can be achieved, thereby enabling the liquid collection assembly 110 to enrich water.

In one feasible embodiment, the moisture adsorption-desorption member also includes an enrichment member, and the enrichment member is configured to supply energy to the enrichment zone; the enrichment member includes at least one of a phase change heat exchanger, a Peltier effect heat exchanger, a liquid cooling heat exchanger, a fan, or a vortex tube. Based on this, it facilitates the supply of cold energy to the rotary disk 122 via the enrichment member, thereby facilitating the capture of water vapor and moisture in the air by the rotary disk 122.

It can be understood that, to reduce the cost of the liquid water source collection apparatus, the enrichment member may be a fan.

In one feasible embodiment, the regeneration member includes at least one of: a thermal radiation, a hot end of a heat pump, a hot end of a heat pipe, or a solar heat source. Based on this, it facilitates the provision of thermal energy to the rotary disk 122 by the regeneration member, facilitates the release of moisture by the rotary disk 122, and facilitates the enrichment of liquid water by the liquid collection assembly 110.

As shown in FIGs. 3 and 4, in one feasible embodiment, the liquid enrichment assembly 120 also includes: a first air supply member 123 disposed within the input pipeline 131 and/or the output pipeline 132 and configured to cause air to flow through the enrichment zone of the liquid enrichment assembly 120; a second air supply member 124 disposed within the moisture intake pipeline 141 and/or the moisture release pipeline 142 and configured to cause air to flow through the regeneration zone of the liquid enrichment assembly 120; and a driving member 125 connected to the rotary disk 122 and configured to drive the rotary disk 122 to rotate.

In this technical solution, the liquid enrichment assembly 120 may also include a first air supply member 123. By means of the arrangement of the first air supply member 123, it facilitates the formation of an airflow by the air passing through the input pipeline 131 and the output pipeline 132 to flow through the enrichment zone of the liquid enrichment assembly 120, thereby facilitating the capture of moisture and water vapor in the air by the rotary disk 122.

In this technical solution, the liquid enrichment assembly 120 may also include a second air supply member 124. By means of the arrangement of the second air supply member 124, it facilitates the formation of an airflow by the air. The airflow passes through the moisture intake pipeline 141 and the moisture release pipeline 142 to carry the moisture and water vapor released via the rotary disk 122, to enrich liquid water into the liquid collection assembly 110.

By means of the arrangement of the first air supply member 123 and the second air supply member 124, kinetic energy can be provided for the flow of air, facilitating the capture and release of moisture.

As shown in FIGs. 2 to 7, according to a second aspect of the embodiments of the present disclosure, an air conditioner is provided. The air conditioner includes: the liquid water source collection apparatus according to any one of the above technical solutions; and an air conditioner body.

Since the air conditioner provided according to the embodiments of the present disclosure includes the air conditioner according to any one of the above technical solutions, the air conditioner possesses all the beneficial effects of the above technical solutions.

The air conditioner provided according to the embodiments of the present disclosure includes the liquid water source collection apparatus and the air conditioner body, and the liquid water source collection apparatus includes the liquid collection assembly 110, the liquid enrichment assembly 120, the first pipeline assembly 130, and the second pipeline assembly 140. During use, the first pipeline assembly 130 is configured to supply air to the moisture adsorption-desorption member, and the moisture adsorption-desorption member captures water vapor and moisture in the air; subsequently, an energy supply assembly can provide energy to the moisture adsorption-desorption member to cause the moisture adsorption-desorption member to release moisture, and the moisture can be supplied to the liquid collection assembly 110 through the second pipeline assembly 140 for storage. When the air conditioner body requires liquid water, the liquid water source collection apparatus can output liquid water to the air conditioner. This makes the water usage of the air conditioner more convenient, and eliminates the need for a user to replenish water or enables a great reduction in the frequency of water replenishment by the user, thereby ensuring the convenience of water usage for the air conditioner and improving user experience.

As shown in FIGs. 2 to 7, in one feasible embodiment, the air conditioner body includes a heat exchanger, and the heat exchanger is in communication with the second pipeline assembly 14 and the liquid collection assembly 110.

In this technical solution, considering that the air conditioner may be in a cooling or heating mode, and at least one heat exchanger in the outdoor unit or the indoor unit of the air conditioner will serve as an evaporator, in this technical solution, the second pipeline assembly 140 is made to be in communication with the heat exchanger of the air conditioner body. The air with high water content output via the second pipeline assembly 140 is transported to the air conditioner body for condensation to generate condensed water, and then the liquid collection assembly 110 collects the condensed water via the air conditioner body, which can improve the water production efficiency.

As shown in FIGs. 2 to 7, in one feasible embodiment, the air conditioner body includes: an indoor heat exchanger 210; a compressor 220 connected to the indoor heat exchanger 210; an outdoor heat exchanger 230 connected to the compressor 220; a first throttling assembly 240 connected to the outdoor heat exchanger 230 and the indoor heat exchanger 210; and a first refrigerant pipeline in communication with the indoor heat exchanger 210, the compressor 220, the outdoor heat exchanger 230, and the first throttling assembly 240 to form a refrigerant circulation.

In this technical solution, the air conditioner may also include an indoor heat exchanger 210, a compressor 220, an outdoor heat exchanger 230, a first throttling assembly 240, and a first refrigerant pipeline. The refrigerant circulates among the indoor heat exchanger 210, the compressor 220, the outdoor heat exchanger 230, and the first throttling assembly 240 through the first refrigerant pipeline. By means of the compressor 220, the pressure state and temperature of the refrigerant can be adjusted, and further by controlling the flow direction of the refrigerant, the indoor heat exchanger 210 can be controlled to perform heating or cooling, such that the indoor temperature can be adjusted.

In one feasible embodiment, the moisture release pipeline 142 and the liquid collection assembly 110 are in communication with at least one of the indoor heat exchanger 210 or the outdoor heat exchanger 230; in the case where the moisture release pipeline 142 is in communication with the outdoor heat exchanger 230 and the indoor heat exchanger 210, the liquid collection assembly 110 includes a first water tank 111 and a second water tank 112; the first water tank 111 is in communication with the outdoor heat exchanger 230, and the second water tank 112 is in communication with the indoor heat exchanger 210.

In this technical solution, considering that the air conditioner may be in a cooling or heating mode, and at least one of the outdoor heat exchanger 230 or the indoor heat exchanger 210 of the air conditioner will serve as an evaporator, in this technical solution, the moisture release pipeline 142 is made to be in communication with the outdoor heat exchanger 230 and/or the indoor heat exchanger 210. The air with high water content output via the second pipeline assembly 140 is transported to the one serving as the evaporator between the outdoor heat exchanger 230 and the indoor heat exchanger 210, causing the moisture to condense into gas, and then the liquid collection assembly 110 collects the condensed water via the outdoor heat exchanger 230 and/or the indoor heat exchanger 210, which can improve the water production efficiency.

As shown in FIG. 3, in one feasible embodiment, the moisture release pipeline 142 is in communication with the indoor heat exchanger 210, and the liquid collection assembly 110 is in communication with the indoor heat exchanger 210.

In this technical solution, the moisture release pipeline 142 of the second pipeline group may be in communication with the indoor heat exchanger 210. The air, which carries moisture and water vapor and is discharged via the moisture release pipeline 142, will exchange heat with the outdoor heat exchanger 230. When the air conditioner is cooling the indoor environment, the indoor heat exchanger 210 serves as an evaporator, and the outdoor heat exchanger 230 serves as a condenser. The indoor heat exchanger 210 can condense the water vapor in the air, and then the liquid formed by condensation is collected by means of the liquid collection assembly 110. When a water-using apparatus needs to use water, the liquid accumulated in the liquid collection assembly 110 can be supplied to the water-using apparatus. With such an arrangement, the components of the air conditioner body can be utilized to condense the air with high water content. The air with higher humidity and water content can produce more water, and then the liquid collection assembly 110 collects the condensed liquid water via the air conditioner body, which can improve the water production efficiency.

As shown in FIG. 4, in one feasible embodiment, the moisture release pipeline 142 is in communication with the outdoor heat exchanger 230, and the liquid collection assembly 110 is in communication with the outdoor heat exchanger 230.

In this technical solution, the moisture release pipeline 142 of the second pipeline group may be in communication with the outdoor heat exchanger 230. The air, which carries moisture and water vapor and is discharged via the moisture release pipeline 142, will exchange heat with the outdoor heat exchanger 230. When the air conditioner is heating the indoor environment, the indoor heat exchanger 210 serves as a condenser, and the outdoor heat exchanger 230 serves as an evaporator. The outdoor heat exchanger 230 can condense the water vapor in the air, and then the liquid formed by condensation is collected by means of the liquid collection assembly 110. When a water-using apparatus needs to use water, the liquid accumulated in the liquid collection assembly 110 can be supplied to the water-using apparatus. With such an arrangement, the components of the air conditioner body can be utilized to condense the air with high water content. The air with higher humidity and water content can produce more water, and then the liquid collection assembly 110 collects the condensed liquid water via the air conditioner body, which can improve the water production efficiency.

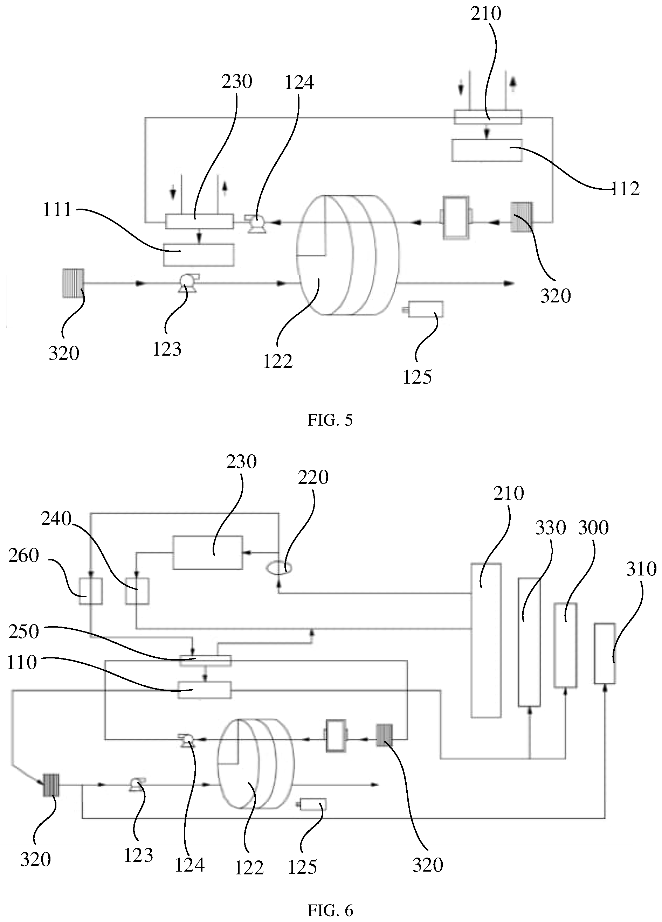

As shown in FIG. 5, in one feasible embodiment, the moisture release pipeline 142 is in communication with the outdoor heat exchanger 230 and the indoor heat exchanger 210; the liquid collection assembly 110 includes a first water tank 111 and a second water tank 112; the first water tank 111 is in communication with the outdoor heat exchanger 230, and the second water tank 112 is in communication with the indoor heat exchanger 210.

In this technical solution, the moisture release pipeline 142 may also be connected to the outdoor heat exchanger 230 and the indoor heat exchanger 210 simultaneously. Based on this, regardless of whether the air conditioner is in a cooling or heating mode, there will be one heat exchanger serving as an evaporator, and the evaporator can condense the water vapor in the air; subsequently, the liquid formed by condensation is collected by means of the liquid collection assembly 110. When a water-using apparatus needs to use water, the liquid accumulated in the liquid collection assembly 110 can be supplied to the water-using apparatus. With such an arrangement, regardless of whether the air is under a cooling or heating condition, the components of the air conditioner body can be utilized to condense the air with high water content. The air with higher humidity and water content can produce more water, and then the liquid collection assembly 110 collects the condensed liquid water via the air conditioner body, which can improve the water production efficiency.

In this technical solution, the structural composition of the liquid collection assembly 110 is further provided. The liquid collection assembly 110 may include a first water tank 111 and a second water tank 112. Since the first water tank and the second water tank respectively receive the water formed after condensation via the outdoor heat exchanger 230 and the indoor heat exchanger 210, the water enrichment efficiency can be further improved, and the water usage demand of the air conditioner body can be ensured.

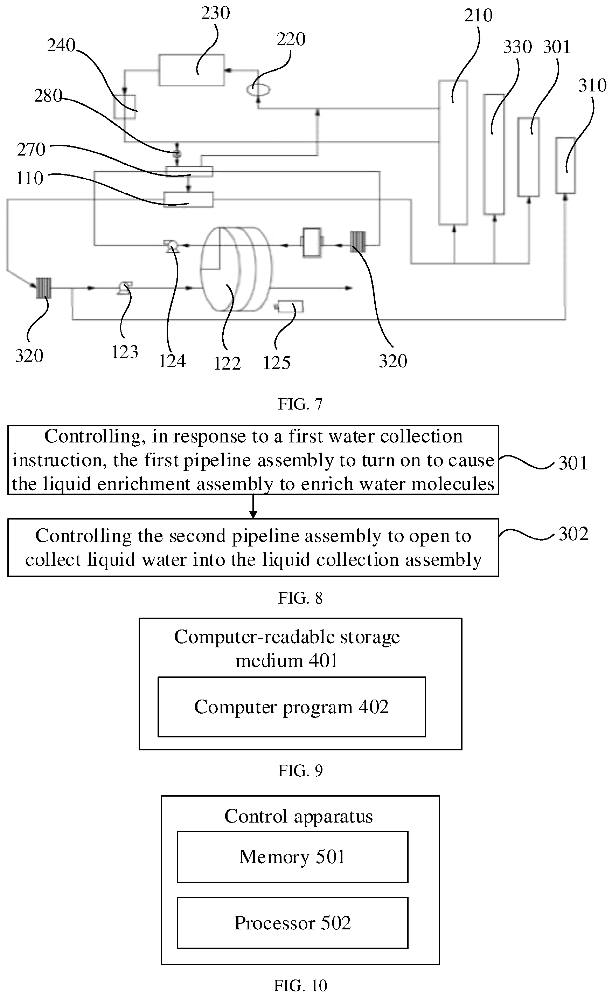

As shown in FIGs. 6 and 7, in one feasible embodiment, the air conditioner body also includes: a second outdoor heat exchanger in communication with the regeneration zone and configured to condense moisture released from the regeneration zone.

In this technical solution, the air conditioner body may also include a second outdoor heat exchanger; that is, in addition to being equipped with the indoor heat exchanger 210 and the outdoor heat exchanger 230 of the air conditioner body, the air conditioner may also be equipped with the second outdoor heat exchanger. The medium, which is output via the regeneration zone and enriches moisture, can be supplied to the second outdoor heat exchanger, and the second outdoor heat exchanger condenses the moisture, which can produce more condensed water.

In one feasible embodiment, the second outdoor heat exchanger is a first liquid collection heat exchanger 250, and the moisture release pipeline 142 is in communication with the first liquid collection heat exchanger 250. The air conditioner body also includes a second refrigerant pipeline; the second refrigerant pipeline is in communication with the first liquid collection heat exchanger 250, one end of the second refrigerant pipeline is in communication with the indoor heat exchanger 210, and the other end of the second refrigerant pipeline is in communication with the compressor 220, such that the first liquid collection heat exchanger 250 is connected in parallel with the outdoor heat exchanger 230.

In this technical solution, the second outdoor heat exchanger may be a first liquid collection heat exchanger 250; that is, in addition to being equipped with the indoor heat exchanger 210 and the outdoor heat exchanger 230 of the air conditioner body, the air conditioner may also be equipped with the first liquid collection heat exchanger 250. By means of the arrangement of the second refrigerant pipeline, the first liquid collection heat exchanger is connected in parallel with the outdoor heat exchanger 230. Based on this, when the air conditioner is in a heating mode, and the outdoor heat exchanger 230 serves as an evaporator, the first liquid collection heat exchanger 250 also serves as an evaporator. The first liquid collection heat exchanger 250 can condense water vapor in the air discharged via the moisture release pipeline 142, and then the liquid formed by the condensation of the condensation assembly can be collected by means of the liquid collection assembly 110. The arrangement of the second refrigerant pipeline and the second throttling assembly 260 facilitates the control of the temperature of the liquid collection heat exchanger, making the formation of condensed water or frost easier, and the liquid enrichment efficiency can be improved.

In some examples, the second refrigerant pipeline may be in communication with the indoor heat exchanger 210 or the compressor 220, may be in communication between the compressor 220 and the outdoor heat exchanger 230, or may be in communication between the first throttling assembly 240 and the indoor heat exchanger 210; it is only required to achieve a parallel connection between the first liquid collection heat exchanger 250 and the outdoor heat exchanger 230, and the communication position of the second refrigerant pipeline on the first refrigeration pipeline is not limited in the present disclosure.

In some examples, as shown in FIG. 6, the second refrigerant pipeline flows through the first liquid collection heat exchanger 250, one end of the second refrigerant pipeline is in communication with the first refrigerant pipeline between the first throttling assembly 240 and the indoor heat exchanger 210, and the other end of the second refrigerant pipeline is in communication with the first refrigerant pipeline between the compressor 220 and the outdoor heat exchanger 230, such that the first liquid collection heat exchanger 250 is connected in parallel with the outdoor heat exchanger 230. The air conditioner body also includes: a second throttling assembly 260 connected to the indoor heat exchanger 210 and the first liquid collection heat exchanger 250; and a third air supply member configured to supply air to the first liquid collection heat exchanger 250.

In this technical solution, the air conditioner also includes a third air supply member, and the third air supply member is configured to supply air to the condensation assembly. Based on this, in the case where the condensation assembly frosts, supplying air via the first air supply assembly facilitates the melting of the frost.

As shown in FIG. 7, in one feasible embodiment, the second outdoor heat exchanger is a second liquid collection heat exchanger 270, and the moisture release pipeline 142 is in communication with the second liquid collection heat exchanger 270. The air conditioner body also includes: a third refrigerant pipeline flowing through the second liquid collection heat exchanger 270, one end of the third refrigerant pipeline being in communication with the first throttling assembly 240, and the other end of the third refrigerant pipeline being in communication with the indoor heat exchanger 210; a control valve 280 disposed on the third refrigerant pipeline; and/or a fourth air supply member configured to supply air to the second liquid collection heat exchanger 270.

In this technical solution, the air conditioner body may also include a third refrigerant pipeline, one end of the third refrigerant pipeline is in communication with the first refrigerant pipeline between the first throttling assembly 240 and the indoor heat exchanger 210, and the other end of the third refrigerant pipeline is in communication with the first refrigerant pipeline between the compressor 220 and the indoor heat exchanger 210. When the air conditioner body is in a cooling mode, and the indoor heat exchanger 210 serves as an evaporator, the liquid collection heat exchanger also serves as an evaporator. The second liquid collection heat exchanger 270 can condense water vapor in the air discharged via the moisture release pipeline 142, and then the liquid formed by condensation of the condensation assembly can be collected by means of the liquid collection assembly 110; alternatively, the second liquid collection heat exchanger 270 may also desublimate the water vapor in the air into frost, and after the frost melts, liquid water can also be formed for collection by the liquid collection assembly 110. The arrangement of the third refrigerant pipeline and the third throttling assembly facilitates the control of the temperature of the liquid collection heat exchanger, making the formation of condensed water or frost easier, and the liquid enrichment efficiency can be improved.

It can be understood that the third refrigerant pipeline may be in communication with the compressor 220, may be in communication with the indoor heat exchanger 210, or may be in communication between the compressor 220 and the indoor heat exchanger 210; it is only required to achieve a parallel connection between the second liquid collection heat exchanger 270 and the indoor heat exchanger 210, and the communication position of the third refrigerant pipeline on the first refrigeration pipeline is not limited in the present disclosure.

In this technical solution, the air conditioner body also includes a fourth air supply member, and the fourth air supply member is configured to supply air to the condensation assembly. Based on this, in the case where the condensation assembly frosts, supplying air via the fourth air supply assembly facilitates the melting of the frost.

In this technical solution, the air conditioner may also include a control valve 280, and the control valve 280 can control the opening or closing of the third refrigerant pipeline and adjust the opening degree of the third refrigerant pipeline. Based on this, the control of the start or stop of the condensation assembly is facilitated, and meanwhile, the adjustment of the water production efficiency of the condensation assembly is facilitated.

As shown in FIG. 7, in some examples, one end of the third refrigerant pipeline is in communication with the first refrigerant pipeline between the first throttling assembly 240 and the indoor heat exchanger 210, and the other end of the third refrigerant pipeline is in communication with the first refrigerant pipeline between the compressor 220 and the indoor heat exchanger 210. The air conditioner body also includes: a control valve 280 disposed on the third refrigerant pipeline; and a fourth air supply member configured to supply air to the second liquid collection heat exchanger 270.

As shown in FIG. 2, in one feasible embodiment, the air conditioner also includes: a second housing 290; the outdoor heat exchanger 230, the compressor 220, and the liquid collection assembly 110 are disposed within the second housing 290.

In this technical solution, the air conditioner may also include a second housing 290, and the outdoor heat exchanger 230, the compressor 220, and the liquid collection assembly 110 can be accommodated by means of the arrangement of the second housing 290. Based on this, in the case where the second housing 290 is disposed outdoors, the outdoor heat exchanger 230, the compressor 220, and the liquid collection assembly 110 can also be disposed outdoors. On the one hand, the amount of space occupied by the air conditioner indoors can be reduced, and user experience can be improved; on the other hand, the noise of the air conditioner can be reduced, and user experience can be improved.

As shown in FIGs. 2 to 7, in one feasible embodiment, the air conditioner also includes: a humidifier 300, the liquid collection assembly 110 being in communication with the humidifier 300. The humidifier 300 includes a curtain body, and the liquid collection assembly 110 is configured to output liquid to the curtain body.

In this technical solution, the air conditioner may also include a humidifier 300, and the humidifier 300 may include a curtain body. When it is necessary to humidify an air environment, liquid can be supplied onto the curtain body by a liquid collection part, and then the liquid evaporates to adjust indoor air humidity.

As shown in FIGs. 2 to 7, in one feasible embodiment, the air conditioner also includes: a fresh air module 310 including a first filter member; and a second filter member 320 configured to be disposed upstream of the airflow of the enrichment zone and/or the regeneration zone.

In this technical solution, the air conditioner may also include a fresh air module 310, and the fresh air module 310 can filter air by means of the first filter member disposed at an air inlet of the fresh air module 310, to improve the quality of indoor air.

In this technical solution, the air conditioner may also include a second filter member 320, and the second filter member 320 is disposed upstream of the airflow of the enrichment zone and/or the regeneration zone, making the air introduced by the liquid water source collection apparatus cleaner, and enabling the liquid enrichment assembly 120 to be in a better liquid enrichment state.

As shown in FIGs. 3 to 7, there may be a plurality of second filter members 320; that is, the plurality of second filter members are disposed upstream of the airflow of the enrichment zone and the regeneration zone, respectively. When there are a plurality of second filter members 320, the second filter members 320 may be arranged on different sides of the rotary disk 122, while the first air supply member 123 and the second air supply member 124 are arranged on the same side of the rotary disk 122; the first air supply member 123 is disposed upstream of the airflow of the rotary disk 122, disposed in correspondence with the enrichment zone, and configured to supply air to the rotary disk 122, whereas the second air supply member 124 is disposed downstream of the airflow of the rotary disk 122, disposed in correspondence with the regeneration zone, and configured to draw the airflow passing through the rotary disk 122. That is, relative to the enrichment zone on the rotary disk 122, the airflow may first pass through the second filter member 320 on one side of the rotary disk 122, and then enter the enrichment zone via the first air supply member 123; regarding the regeneration zone on the rotary disk 122, the airflow may first pass through the second filter member 320 on the other side of the rotary disk 122, and then pass through the rotary disk 122 and/or the regeneration member, and finally be drawn out via the second air supply member 124. Such an arrangement ensures the air supply efficiency of the first air supply member 123, and positions the second air supply member 124 away from a heating device, which can improve purification efficiency and service life.

In some examples, when there are a plurality of second filter members 320, the second filter members 320 may be arranged on the same side of the rotary disk 122, and the first air supply member 123 and the second air supply member 124 are arranged on different sides of the rotary disk 122; the first air supply member 123 is disposed upstream of the airflow of the rotary disk 122, disposed in correspondence with the enrichment zone, and configured to supply air to the rotary disk 122, whereas the second air supply member 124 is disposed downstream of the airflow of the rotary disk 122, disposed in correspondence with the regeneration zone, and configured to draw the airflow passing through the rotary disk 122. That is, relative to the enrichment zone on the rotary disk 122, the airflow may first pass through the second filter member 320 on one side of the rotary disk 122, and then enter the enrichment zone via the first air supply member 123; similarly, regarding the regeneration zone on the rotary disk 122, the airflow may first pass through the second filter member 320 on the other side of the rotary disk 122, and then pass through the rotary disk 122, and finally be discharged via the second air supply member 124. Such an arrangement ensures the air supply efficiency of the first air supply member 123, and similarly positions the second air supply member 124 away from a heating device, which can improve purification efficiency and service life.

It can be understood that upstream and downstream are determined based on the flow direction of the medium. Taking the example where the medium output by the first pipeline assembly 130 is air, the air medium first passes through the upstream of the airflow of the enrichment zone, passes through the enrichment zone, and is then output via the downstream of the airflow. Similarly, for the upstream of the airflow and the downstream of the airflow of the regeneration zone, the air medium passes through the upstream of the airflow, passes through the regeneration zone, and is then output through the downstream of the airflow. That is, the upstream of the airflow and the downstream of the airflow are determined based on the flow direction of the medium, rather than being determined based on the placement position or orientation of the moisture adsorption-desorption member.

In one feasible embodiment, the air conditioner also includes: a cleaning mechanism 330; the liquid collection assembly 110 is in communication with the cleaning mechanism 330, and the cleaning mechanism 330 is configured to clean the first filter member and/or the second filter member 320.

In this technical solution, the air conditioner may also include a cleaning mechanism 330; the first filter member and/or the second filter member 320 can be cleaned by the cleaning mechanism, and the cleaning mechanism 330 is in communication with the liquid collection assembly 110; the liquid collection assembly 110 can supply water used for cleaning a filter screen to the cleaning mechanism 330, which can improve the cleaning efficiency and cleanliness of the first filter member and/or the second filter member 320, thereby ensuring a filtering effect, improving indoor air quality, and meanwhile reducing manual intervention during a cleaning process, thus improving user experience.

In some examples, the air conditioner may also include a cleaning filter, and the cleaning filter may be disposed within the cleaning mechanism 330, at an output end of the liquid collection assembly 110, or on a path between the liquid collection assembly 110 and the cleaning mechanism 330. The cleaning filter is configured to filter water output by the liquid collection assembly 110 to the cleaning mechanism 330 or configured to filter water output by the cleaning mechanism 330. Such an arrangement makes water used for cleaning cleaner, which can reduce the probability of secondary contamination.

It can be understood that by means of the air conditioner and the liquid water source collection apparatus provided according to the embodiments of the present disclosure, a vast majority of water collected by the liquid water source collection apparatus is liquid water formed by condensation of water vapor in air or liquid water obtained by melting frost; therefore, when the liquid water source collection apparatus is in a clean state, the obtained liquid water is also clean. Adding a cleaning filter can further ensure the cleanliness of the water and make the water purer, which can further improve the user experience.

As shown in FIG. 8, according to a third aspect of the embodiments of the present disclosure, a control method is provided. The control method is used to control the air conditioner according to any one of the above technical solutions, and the control method includes the following steps.

In step 301, in response to a first water collection instruction, the first pipeline assembly is controlled to turn on to cause the liquid enrichment assembly to enrich water molecules. It can be understood that the enrichment of water molecules by the liquid enrichment assembly may be condensing water vapor in the air to form condensed water, or may be desublimating water vapor in the air to cause the water vapor to solidify to form frost, and then collecting and melting the frost can similarly obtain liquid water.

In step 302, the second pipeline assembly is controlled to open to collect liquid water into the liquid collection assembly.

Since the control method provided according to the embodiments of the present disclosure is applied to the air conditioner of the above technical solutions, the control method possesses all the beneficial effects of the air conditioner according to the above technical solutions.

In the control method provided according to the embodiments of the present disclosure, after the first water collection instruction is received, the first pipeline assembly can be controlled to turn on; air in the first pipeline assembly will flow through the moisture adsorption-desorption member, and the moisture adsorption-desorption member captures water vapor and moisture in the air; after the moisture adsorption-desorption member adsorbs the water vapor and moisture, the second pipeline assembly can be turned on, and meanwhile, energy can be provided to the moisture adsorption-desorption member by an energy supply assembly, prompting the moisture adsorption-desorption member to release moisture, and the moisture can be supplied to the liquid collection assembly through the second pipeline assembly for storage and enrichment; when the air conditioner needs to use water, liquid water can be output by the liquid collection assembly. Based on this, by means of the control method provided according to the embodiments of the present disclosure, moisture and water vapor in the air can be utilized to automatically replenish liquid water into the liquid collection assembly; therefore, there is no need for a user to replenish water, or the frequency of water replenishment by the user can be reduced to a great extent, thereby ensuring the convenience of water usage for the air conditioner and improving user experience. In addition, by means of the liquid water source collection apparatus provided according to the embodiments of the present disclosure, when water is not needed, liquid water can be enriched by the liquid enrichment assembly and stored by the liquid collection assembly; therefore, when water is needed, the liquid collection assembly can supply liquid water in time, ensuring that a water-using electrical appliance can obtain sufficient liquid water.

In one feasible embodiment, in response to a second water collection instruction, the heat exchanger in communication with the liquid collection assembly is controlled to serve as an evaporator to form condensed water and/or frost; and the condensed water and/or water resulting from the melting of the frost is collected by the liquid collection assembly.

In this technical solution, it is also possible to respond to a second water collection instruction, and the heat exchanger in communication with the liquid collection assembly can be controlled to serve as an evaporator. When water vapor in the air encounters the evaporator inside the air conditioner, the water vapor will condense into water droplets due to a decrease in temperature. This portion of water can be collected by the liquid collection assembly; similarly, automatic replenishment of liquid water into the liquid collection assembly can be achieved. Therefore, there is no need for a user to replenish water, or the frequency of water replenishment by the user can be reduced to a great extent, thereby ensuring the convenience of water usage for the air conditioner and improving user experience. In addition, by means of the liquid water source collection apparatus provided according to the embodiments of the present disclosure, when water is not needed, liquid water can be enriched by the liquid enrichment assembly and stored by the liquid collection assembly; therefore, when water is needed, the liquid collection assembly can supply liquid water in time, ensuring that a water-using electrical appliance can obtain sufficient liquid water.

In one feasible embodiment, in response to a third water collection instruction, the moisture release pipeline is controlled to turn on to be in communication with the heat exchanger in communication with the liquid collection assembly; the heat exchanger in communication with the liquid collection assembly is controlled to serve as an evaporator to form condensed water and/or frost; and the condensed water and/or water resulting from the melting of the frost is collected by the liquid collection assembly.

In this technical solution, it is also possible to respond to a third water collection instruction; in this case, the air in the first pipeline assembly will flow through the moisture adsorption-desorption member, and the moisture adsorption-desorption member captures water vapor and moisture in the air; after the moisture adsorption-desorption member adsorbs the water vapor and moisture, the second pipeline assembly can be turned on, and meanwhile, energy can be provided to the moisture adsorption-desorption member by an energy supply assembly, prompting the moisture adsorption-desorption member to release moisture. The moisture can be supplied to the heat exchanger through the second pipeline assembly for condensation, and then form condensed water or frost. The condensed water and/or water resulting from the melting of the frost is collected by the liquid collection assembly. By means of such an arrangement, the liquid water source collection apparatus is first utilized to enrich moisture, and then the heat exchanger of the air conditioner is utilized to perform condensation, such that more condensed water can be formed. Finally, the condensed water is collected by the liquid collection assembly. Similarly, automatic replenishment of liquid water into the liquid collection assembly can be achieved. Therefore, there is no need for a user to replenish water, or the frequency of water replenishment by the user can be reduced to a great extent, thereby ensuring the convenience of water usage for the air conditioner and improving user experience. In addition, by means of the liquid water source collection apparatus provided according to the embodiments of the present disclosure, when water is not needed, liquid water can be enriched by the liquid enrichment assembly and stored by the liquid collection assembly; therefore, when water is needed, the liquid collection assembly can supply liquid water in time, ensuring that a water-using electrical appliance can obtain sufficient liquid water, and meanwhile, more liquid water can be collected.

In summary, with the control method provided according to the embodiments of the present disclosure, in the case of responding to the first water collection instruction, the liquid enrichment assembly of the liquid water source collection apparatus can be utilized to collect liquid water; in the case of responding to the second water collection instruction, the evaporator of the air conditioner can be utilized to collect liquid water; and in the case of responding to the third water collection instruction, the liquid enrichment assembly of the liquid water source collection apparatus can be utilized first to enrich moisture, and then the evaporator of the air conditioner is utilized to collect liquid water.

In one feasible embodiment, the control method also includes: generating, based on a water usage demand, the first water collection instruction, the second water collection instruction, or the third water collection instruction; and/or generating, based on a water content of external air, the first water collection instruction, the second water collection instruction, or the third water collection instruction.

In this technical solution, the control method also includes selectively generating a first water collection instruction, a second water collection instruction, or a third water collection instruction based on a water usage demand; that is, a water collection instruction can be generated automatically based on the user's demand, making the water collection action capable of adapting to the water usage demand, such that the collection of liquid water better satisfies the user's demand.

In this technical solution, the control method can also selectively generate a first water collection instruction, a second water collection instruction, or a third water collection instruction based on a water content of external air; that is, a water collection instruction can be generated based on the content of moisture in the external air, making the water collection action capable of adapting to the water content of the external air, ensuring that sufficient liquid water can be produced.

It can be understood that the air conditioner is configured to adjust the temperature for an indoor space, and the water content of external air refers to the water content of outdoor air.

In one feasible embodiment, the step of generating, based on the water usage demand, the first water collection instruction, the second water collection instruction, or the third water collection instruction includes: generating the second water collection instruction in the case where the water usage demand is less than a first threshold; generating the first water collection instruction in the case where the water usage demand is greater than or equal to the first threshold and less than a second threshold; and generating the third water collection instruction in the case where the water usage demand is greater than or equal to the second threshold. A value of the first threshold is less than a value of the second threshold.

In this technical solution, the step of generating a specific water collection instruction based on the water usage demand is further provided. If the water usage demand is less than the first threshold, it indicates that the requirement of the user or the air conditioner for the water usage amount is not high. In this case, the second water collection instruction can be generated, and the collection of liquid water is performed only by utilizing condensed water produced by the evaporator of the air conditioner. When the water usage demand is greater than or equal to the first threshold and less than the second threshold, it indicates that the requirement of the air conditioner or the user for the water usage amount is relatively high. In this case, the liquid enrichment assembly, the first pipeline assembly, and the second pipeline assembly of the liquid water source collection apparatus can be utilized to collect the liquid water, to meet the demand for the water usage amount. When the water usage amount is greater than or equal to the second threshold, it indicates that the water usage demand of the user or the air conditioner is very high. In this case, the third water collection instruction can be generated; moisture is first enriched by utilizing the liquid enrichment assembly of the liquid water source collection apparatus, and then the collection of liquid water is performed by utilizing the evaporator of the air conditioner, thereby maximizing the enrichment efficiency of the liquid water and meeting the demand for the water usage amount.

In one feasible embodiment, the step of generating, based on the water content in the external air, the first water collection instruction, the second water collection instruction, or the third water collection instruction includes: generating the third water collection instruction in the case where the water content is less than a fourth threshold; generating the first water collection instruction in the case where the water content is greater than or equal to the fourth threshold and less than a fifth threshold; and generating the second water collection instruction in the case where the water content is greater than or equal to the fifth threshold. A value of the fourth threshold is less than a value of the fifth threshold.

In this technical solution, the step of generating a specific water collection instruction based on the water content is further provided. If the water usage demand is less than the fourth threshold, it indicates that the water content in the outdoor air is very low. In this case, the third water collection instruction can be generated; moisture is first enriched by utilizing the liquid enrichment assembly of the liquid water source collection apparatus, and then the collection of liquid water is performed by utilizing the evaporator of the air conditioner, thereby maximizing the enrichment efficiency of the liquid water and meeting the demand for the water usage amount. When the water content is greater than or equal to the fourth threshold and less than the fifth threshold, it indicates that there is a certain amount of water content in the external air. In this case, the liquid enrichment assembly, the first pipeline assembly, and the second pipeline assembly of the liquid water source collection apparatus can be utilized to collect the liquid water to meet the demand for the water usage amount. When the water content is greater than or equal to the fifth threshold, it indicates that the water content in the air is very high. In this case, the second water collection instruction can be directly generated; the collection of liquid water is performed only by utilizing condensed water produced by the evaporator of the air conditioner, which is sufficient to meet the water usage demand, and meanwhile, energy consumption can be reduced.

As shown in FIG. 9, according to a fourth aspect of the embodiments of the present disclosure, a computer-readable storage medium 401 is provided. The computer-readable storage medium 401 stores a computer program 402 to implement the control method according to any one of the above technical solutions.

The computer-readable storage medium 401 according to the embodiments of the present disclosure implements the control method according to any one of the above technical solutions. Therefore, the computer-readable storage medium 401 possesses all the beneficial effects of the control method according to any one of the above technical solutions.

According to the computer-readable storage medium 401 provided in the embodiments of the present disclosure, after the first water collection instruction is received, the first pipeline assembly can be controlled to turn on; air in the first pipeline assembly will flow through the moisture adsorption-desorption member, and the moisture adsorption-desorption member captures water vapor and moisture in the air; after the moisture adsorption-desorption member adsorbs the water vapor and moisture, the second pipeline assembly can be turned on, and meanwhile, energy can be provided to the moisture adsorption-desorption member by an energy supply assembly, prompting the moisture adsorption-desorption member to release moisture, and the moisture can be supplied to the liquid collection assembly through the second pipeline assembly for storage and enrichment; when the air conditioner needs to use water, liquid water can be output by the liquid collection assembly. Based on this, by means of the control method provided according to the embodiments of the present disclosure, moisture and water vapor in the air can be utilized to automatically replenish liquid water into the liquid collection assembly; therefore, there is no need for a user to replenish water, or the frequency of water replenishment by the user can be reduced to a great extent, thereby ensuring the convenience of water usage for the air conditioner and improving user experience. In addition, by means of the liquid water source collection apparatus provided according to the embodiments of the present disclosure, when water is not needed, liquid water can be enriched by the liquid enrichment assembly and stored by the liquid collection assembly; therefore, when water is needed, the liquid collection assembly can supply liquid water in time, ensuring that a water-using electrical appliance can obtain sufficient liquid water.

Based on such an understanding, the technical solutions according to the present disclosure may be embodied in the form of a software product. The software product may be stored in a non-volatile storage medium (which may be a CD-ROM, a USB flash drive, a portable hard drive, or the like), and includes several instructions to enable a computer device (which may be a personal computer, a server, a network device, or the like) to perform the method according to the implementation scenarios of the present disclosure.

As shown in FIG. 10, according to a fourth aspect of the embodiments of the present disclosure, a control apparatus is provided. The control apparatus includes: a memory 501 storing a computer program; and a processor 502 running the computer program. The processor 502, when running the computer program, implements the control method according to any one of the above technical solutions.

The control apparatus according to the embodiments of the present disclosure implements the control method according to any one of the above technical solutions. Therefore, the control apparatus possesses all the beneficial effects of the control method according to any one of the above technical solutions.

According to the control apparatus provided in the embodiments of the present disclosure, after the first water collection instruction is received, the first pipeline assembly can be controlled to turn on; air in the first pipeline assembly will flow through the moisture adsorption-desorption member, and the moisture adsorption-desorption member captures water vapor and moisture in the air; after the moisture adsorption-desorption member adsorbs the water vapor and moisture, the second pipeline assembly can be turned on, and meanwhile, energy can be provided to the moisture adsorption-desorption member by an energy supply assembly, prompting the moisture adsorption-desorption member to release moisture, and the moisture can be supplied to the liquid collection assembly through the second pipeline assembly for storage and enrichment; when the air conditioner needs to use water, liquid water can be output by the liquid collection assembly. Based on this, by means of the control method provided according to the embodiments of the present disclosure, moisture and water vapor in the air can be utilized to automatically replenish liquid water into the liquid collection assembly; therefore, there is no need for a user to replenish water, or the frequency of water replenishment by the user can be reduced to a great extent, thereby ensuring the convenience of water usage for the air conditioner and improving user experience. In addition, by means of the liquid water source collection apparatus provided according to the embodiments of the present disclosure, when water is not needed, liquid water can be enriched by the liquid enrichment assembly and stored by the liquid collection assembly; therefore, when water is needed, the liquid collection assembly can supply liquid water in time, ensuring that a water-using electrical appliance can obtain sufficient liquid water.

In an exemplary embodiment, the control apparatus may also include: an input/output interface and a display device. The functional units may communicate with each other via a bus. The memory stores a computer program, and the processor is configured to run the program stored in the memory to perform the method according to the above embodiments.

The above storage medium may also include an operating system and a network communication module. The operating system is the program that manages hardware and software resources of the physical device in the above method, and supports the operation of an information processing program and other software and/or programs. The network communication module is configured to implement the communication between the assemblies inside the storage medium, and the communication with other hardware and software in the information processing physical device.

Based on the descriptions of the above embodiments, those skilled in the art can clearly understand that the present disclosure may be implemented by the mode of software in combination with a necessary general hardware platform, or may be implemented by hardware.

The present disclosure is described with reference to flowcharts and/or block diagrams of the method, the device (system), and the computer program product according to the embodiments of the present disclosure. It should be understood that each procedure and/or block in the flowcharts and/or the block diagrams and a combination of the procedures and/or the blocks in the flowcharts and/or the block diagrams may be implemented by computer program instructions. These computer program instructions may be provided to a processor of a general-purpose computer, a special-purpose computer, an embedded computer, or other programmable data processing devices to generate a machine, such that an apparatus for achieving functions designated in one or more procedures of the flowcharts and/or one or more blocks of the block diagrams is generated based on instructions executed by the processors of the computers or other programmable data processing devices.

In the present disclosure, the terms "first", "second", and "third" are merely used for descriptive purposes, and shall not be understood as indicating or implying relative importance. The term "plurality of" means two or more, unless explicitly defined otherwise. The terms "mount", "interconnect", "connect", "fix", and the like should be interpreted in their broad senses. For example, "connect" may be a fixed connection, a detachable connection, or an integral connection, and "interconnect" may be a direct connection, or an indirect connection via an intermediate. For those of ordinary skill in the art, the specific meanings of the aforementioned terms in the present disclosure can be understood according to specific conditions.

In the description of the present disclosure, it should be understood that orientations or positional relationships indicated by terms such as "upper", "lower", "left", "right", "front", and "rear" are those shown based on the drawings, and are merely intended to facilitate and simplify description of the present disclosure rather than to indicate or imply that the indicated apparatus or unit must have a specific direction and be structured and operated according to the specific orientation, and should not be construed as limiting the present disclosure.

In the description of the specification, the description of terms "one embodiment", "some embodiments", "a specific embodiment", and the like means that specific features, structures, materials, or characteristics described in connection with the embodiments or examples are included in at least one embodiment or example of the present disclosure. In the specification, the schematic description of the aforementioned terms does not necessarily refer to the same embodiment or example. Moreover, the specific features, structures, materials, or characteristics described may be combined in a suitable manner in any one or more embodiments or examples.

The above are only preferred embodiments of the present disclosure and are not intended to limit the present disclosure. For those skilled in the art, the present disclosure can be modified and varied. Any modification, equivalent substitution, improvement, and the like made within the spirit and principle of the present disclosure shall all fall within the protection scope of the present disclosure.

## Claims

1. A liquid water source collection apparatus, wherein the liquid water source collection apparatus comprises:
a liquid collection assembly;
a liquid enrichment assembly comprising a moisture adsorption-desorption member and an energy supply member, the energy supply member being at least partially disposed corresponding to the moisture adsorption-desorption member;
a first pipeline assembly in communication with the moisture adsorption-desorption member and configured to supply a water-containing medium to the moisture adsorption-desorption member; and
a second pipeline assembly, an input end of the second pipeline assembly being in communication with the moisture adsorption-desorption member, an output end of the second pipeline assembly being in communication with the liquid collection assembly, and the liquid collection assembly being configured to receive moisture released by the moisture adsorption-desorption member.

2. The liquid water source collection apparatus according to claim 1, wherein
the moisture adsorption-desorption member comprises an enrichment zone and a regeneration zone;
the first pipeline assembly comprises:
an input pipeline in communication with the liquid enrichment assembly and disposed upstream of an airflow of the enrichment zone; and
an output pipeline in communication with the liquid enrichment assembly and disposed downstream of the airflow of the enrichment zone;
the second pipeline assembly comprises:
a moisture intake pipeline in communication with the liquid enrichment assembly and disposed upstream of an airflow of the regeneration zone; and
a moisture release pipeline, one end of the moisture release pipeline being in communication with the liquid enrichment assembly and disposed downstream of the airflow of the regeneration zone, and the other end of the moisture release pipeline being in communication with the liquid collection assembly.

3. The liquid water source collection apparatus according to claim 2, wherein
the moisture adsorption-desorption member comprises:
a first housing, with the enrichment zone and the regeneration zone formed on the first housing; and
a rotary disk rotatably disposed within the first housing, the rotary disk being configured to capture water molecules in air;
the energy supply member comprises:
a regeneration member configured to provide energy to the regeneration zone to cause the water molecules to detach from the rotary disk.

4. The liquid water source collection apparatus according to claim 3, wherein the moisture adsorption-desorption member also comprises an enrichment member configured to provide energy to the enrichment zone;
the enrichment member comprises at least one of a phase change heat exchanger, a Peltier effect heat exchanger, a liquid cooling heat exchanger, a fan, or a vortex tube; and/or
the regeneration member comprises at least one of: a thermal radiation, a hot end of a heat pump, a hot end of a heat pipe, or a solar heat source.

5. The liquid water source collection apparatus according to claim 3, wherein the liquid enrichment assembly also comprises:
a first air supply member disposed within the input pipeline and/or the output pipeline and configured to cause air to flow through the enrichment zone of the liquid enrichment assembly;
a second air supply member disposed within the moisture intake pipeline and/or the moisture release pipeline and configured to cause air to flow through the regeneration zone of the liquid enrichment assembly; and
a driving member connected to the rotary disk and configured to drive the rotary disk to rotate.

6. The liquid water source collection apparatus according to claim 1, wherein
the liquid collection assembly is configured to be connected to a water-using apparatus, and the water-using apparatus comprises a humidification component and/or a cleaning component.

7. An air conditioner, wherein the air conditioner comprises:
the liquid water source collection apparatus according to any one of claims 1 to 6; and
an air conditioner body.

8. The air conditioner according to claim 7, wherein the air conditioner body comprises a heat exchanger, and the heat exchanger is in communication with the second pipeline assembly and the liquid collection assembly.

9. The air conditioner according to claim 7, wherein the air conditioner body comprises:
an indoor heat exchanger;
a compressor connected to the indoor heat exchanger;
an outdoor heat exchanger connected to the compressor;
a first throttling assembly connected to the outdoor heat exchanger and the indoor heat exchanger; and
a first refrigerant pipeline in communication with the indoor heat exchanger, the compressor, the outdoor heat exchanger, and the first throttling assembly to form a refrigerant circulation.

10. The air conditioner according to claim 9, wherein
the moisture release pipeline and the liquid collection assembly are in communication with at least one of the indoor heat exchanger or the outdoor heat exchanger; and
in a case where the moisture release pipeline is in communication with the outdoor heat exchanger and the indoor heat exchanger, the liquid collection assembly comprises a first water tank and a second water tank; the first water tank is in communication with the outdoor heat exchanger, and the second water tank is in communication with the indoor heat exchanger.

11. The air conditioner according to claim 9, wherein the air conditioner body also comprises:
a second outdoor heat exchanger in communication with the regeneration zone and configured to condense moisture released from the regeneration zone.

12. The air conditioner according to claim 11, wherein the second outdoor heat exchanger is a first liquid collection heat exchanger, and the moisture release pipeline is in communication with the first liquid collection heat exchanger; the air conditioner body also comprises:
a second refrigerant pipeline in communication with the first liquid collection heat exchanger, one end of the second refrigerant pipeline being in communication with the indoor heat exchanger, and the other end of the second refrigerant pipeline being in communication with the compressor, such that the first liquid collection heat exchanger is connected in parallel with the outdoor heat exchanger; and
a second throttling assembly connected to the indoor heat exchanger and the first liquid collection heat exchanger; and/or a third air supply member configured to supply air to the first liquid collection heat exchanger.

13. The air conditioner according to claim 11, wherein the second outdoor heat exchanger is a second liquid collection heat exchanger, and the moisture release pipeline is in communication with the second liquid collection heat exchanger; the air conditioner body also comprises:
a third refrigerant pipeline in communication with the second liquid collection heat exchanger, one end of the third refrigerant pipeline being in communication with the first throttling assembly, and the other end of the third refrigerant pipeline being in communication with the indoor heat exchanger; and
a control valve disposed on the third refrigerant pipeline; and/or a fourth air supply member configured to supply air to the second liquid collection heat exchanger.

14. The air conditioner according to claim 9, wherein the air conditioner also comprises:
a second housing, with the outdoor heat exchanger, the compressor, and the liquid collection assembly disposed within the second housing.

15. The air conditioner according to any one of claims 7 to 14, wherein the air conditioner also comprises:
a humidifier, the liquid collection assembly being in communication with the humidifier,
wherein the humidifier comprises a curtain body, and the liquid collection assembly is configured to output liquid to the curtain body.

16. The air conditioner according to any one of claims 7 to 14, wherein the air conditioner also comprises:
a fresh air module comprising a first filter member;
a second filter member configured to be disposed upstream of the airflow of the enrichment zone and/or the regeneration zone; and
a cleaning mechanism, the liquid collection assembly being in communication with the cleaning mechanism, and the cleaning mechanism being configured to clean the first filter member and/or the second filter member.

17. A control method, wherein the control method is used to control the air conditioner according to any one of claims 7 to 16, and the control method comprises:
controlling, in response to a first water collection instruction, the first pipeline assembly to turn on to cause the liquid enrichment assembly to enrich water molecules; and
controlling the second pipeline assembly to open to collect liquid water into the liquid collection assembly.

18. The control method according to claim 17, wherein the control method comprises:
controlling, in response to a second water collection instruction, the heat exchanger in communication with the liquid collection assembly to serve as an evaporator to form condensed water and/or frost; and
collecting, by the liquid collection assembly, the condensed water and/or water resulting from melting of the frost.

19. The control method according to claim 18, wherein the control method comprises:
controlling, in response to a third water collection instruction, the moisture release pipeline to turn on to be in communication with the heat exchanger in communication with the liquid collection assembly; controlling the heat exchanger in communication with the liquid collection assembly to serve as an evaporator to form condensed water and/or frost; and
collecting, by the liquid collection assembly, the condensed water and/or water resulting from melting of the frost.

20. The control method according to claim 19, wherein the control method also comprises:
generating, based on a water usage demand, the first water collection instruction, the second water collection instruction, or the third water collection instruction; and/or
generating, based on a water content of external air, the first water collection instruction, the second water collection instruction, or the third water collection instruction.

21. The control method according to claim 20, wherein
the step of generating, based on the water usage demand, the first water collection instruction, the second water collection instruction, or the third water collection instruction comprises:
generating the second water collection instruction in a case where the water usage demand is less than a first threshold;
generating the first water collection instruction in a case where the water usage demand is greater than or equal to the first threshold and less than a second threshold; and
generating the third water collection instruction in a case where the water usage demand is greater than or equal to the second threshold;
wherein a value of the first threshold is less than a value of the second threshold; and/or
the step of generating, based on the water content of the external air, the first water collection instruction, the second water collection instruction, or the third water collection instruction comprises:
generating the third water collection instruction in a case where the water content is less than a fourth threshold;
generating the first water collection instruction in a case where the water content is greater than or equal to the fourth threshold and less than a fifth threshold; and
generating the second water collection instruction in a case where the water content is greater than or equal to the fifth threshold;
wherein a value of the fourth threshold is less than a value of the fifth threshold.

22. A computer-readable storage medium, wherein
the computer-readable storage medium stores a computer program to implement the control method according to any one of claims 17 to 21.

23. A control apparatus, wherein the control apparatus comprises:
a memory storing a computer program; and
a processor running the computer program;
wherein the processor, when running the computer program, implements the control method according to any one of claims 17 to 21.
